# EUROPÄISCHE PATENTSCHRIFT

(11) **EP 4 256 243 B1**
(45) Veröffentlichungstag und Bekanntmachung des Hinweises auf die Patenterteilung: **08.10.2025**
(21) Anmeldenummer: 21834714.4
(22) Anmeldetag: 26.11.2021
(51) Int. Cl.: F24D 19/00, F24D 19/10, F24H 15/14, C02F 1/00

(54) **VERFAHREN ZUM BETRIEB EINER HEIZUNGSANLAGE**
METHOD FOR OPERATING A HEATING SYSTEM
PROCEDE DE FONCTIONNEMENT D'UN SYSTEME DE CHAUFFAGE

(30) Priorität: 04.12.2020 DE 102020132266
(43) Veröffentlichungstag der Anmeldung: 11.10.2023
(73) Patentinhaber: Viessmann Holding International GmbH, 35108 Allendorf (Eder) (DE)
(72) Erfinder: FREITAG, Richard, 35066 Frankenberg/Haubern (DE); GUTKNECHT, Natalie, 35088 Battenberg (DE); FACKINER, Julian, 35117 Münchhausen (DE)
(74) Vertreter: Wolf & Wolf Patentanwaltsgesellschaft mbH
(86) Internationale Anmeldenummer: PCT/DE2021/100935
(87) Internationale Veröffentlichungsnummer: WO 2022/117147

(56) Entgegenhaltungen:
- DE-A1- 102016 218 227
- DE-U1- 202010 004 292
- DE-U1- 202016 006 983

## Beschreibung

Die Erfindung betrifft ein Verfahren zum Betrieb einer Heizungsanlage.

Aus dem Patentdokument DE 10 2011 001 223 A1 ist beispielsweise ein Verfahren zum Betrieb einer Heizungsanlage bekannt, bei dem ein Heizkreismedium durch einen Gesamtströmungspfad eines Heizkreises gefördert wird, bei dem das Heizkreismedium mindestens durch einen von mindestens zwei, zum Gesamtströmungs-pfad gehörenden Teilströmungspfaden des Heizkreises gefördert wird und bei dem geregelt wird, wieviel Heizkreismedium jeweils über die Teilströmungspfade gefördert wird. Bei dieser Lösung ist einer, eine ganze Reihe von veränderlichen Strömungswiderständen (insbesondere Thermostatventile) aufweisen-der Teilströmungspfad derjenige mit den Heizkörpern (dargestellt durch den Kreis mit Doppellinie). Ein anderer, in diesem Fall nur einen einzigen veränderlichen Strömungswiderstand aufweisende Heizkreis ist derjenige mit dem regelbaren Bypass-Ventil (siehe dort Bezugszeichen 4).

Ein weiteres Merkmal des Patentanspruchs 1, nämlich, dass das Heizkreismedium, um es von Verschmutzungen zu reinigen, durch einen am Gesamtströmungspfad des Heizkreises vorgesehenen Filter geleitet wird, ist im vorgenannten Dokument nicht offenbart; die Anmelderin geht aber davon aus, dass auch dieses Merkmal an sich bereits aus dem Stand der Technik bekannt ist.

Der Erfindung liegt die Aufgabe zugrunde, ein Verfahren zum Betrieb einer Heizungsanlage zu verbessern. Insbesondere soll ein eine mögliche Verschmutzung des Filters detektierendes Verfahren bereit gestellt werden.

Diese Aufgabe ist mit einem Verfahren zum Betrieb einer Heizungsanlage gemäß Anspruch 1 gelöst.

Nach der Erfindung ist also vorgesehen, dass bei einer Initialisierung der Heizungsanlage das Heizkreismedium vollständig über den wahlweise die wenigsten veränderlichen Strömungswiderstände oder einen bekannten und/oder einen unveränderlichen Strömungswiderstand aufweisenden Teilströmungspfad - auch Referenzströmungspfad genannt - geleitet und ein Förderleistungsreferenzwert ermittelt und gespeichert wird und dass zur Überprüfung eines Verschmutzungszustandes des Filters während des Betriebs der Heizungsanlage das Heizkreismedium wiederum vollständig über den bei der Initialisierung verwendeten Referenzströmungspfad geleitet, ein Förderleistungswert ermittelt, dieser mit dem Förderleistungsreferenzwert vergleichen und ab einer vorbestimmten Abweichung ein auf eine Verschmutzung des Filters hinweisendes Signal erzeugt wird.

Mit anderen Worten zeichnet sich das erfindungsgemäße Verfahren somit dadurch aus, dass zur Überprüfung eines Verschmutzungszustandes des Filters das Heizkreismedium über den bezüglich seines Strömungswiderstandes am besten einschätzbaren Teilströmungspfad geleitet wird. Ein solches Überprüfungsverfahren ist dabei wesentlich zuverlässiger, als wenn man eine entsprechende Diagnose am anderen Teilströmungspfad vornehmen würde, da der gemessene Volumenstrom (bzw. die Heizkreismediummenge) stark von den weiteren Heizkreiskomponenten, wie zum Beispiel Heizkörpern bzw. Radiatoren mit deren Thermostatventilen, beeinflusst wird bzw. nicht sicher gestellt sein kann, dass die Überprüfung tatsächlich bei identischen Einstellungen zum Beispiel der Thermostatventile der Heizkörper stattfindet.

Die im Patentanspruch 1 zweifach verwendete 10 Maßgabe "vollständig" ist dabei im Sinne von "im wesentlichen vollständig" (also mindestens 90%, bevorzugt 95%, ganz besonders bevorzugt 100%) zu verstehen, und zwar insofern, als dass kleinere, die Referenzwertbildung bzw. den Referenzwertvergleich nicht beeinflussende Leckageströmungen über den anderen Teilströmungspfad akzeptabel sind.

Andere vorteilhafte Weiterbildungen des erfindungsgemäßen Verfahren ergeben sich aus den abhängigen Patentansprüchen.

Der Vollständigkeit halber wird noch auf die Dokumente EP 0 808 205 B1, EP 1 897 439 A1 und US 9,366,448 B2 hingewiesen. Aus allen drei Schriften sind zwar bereits Vorrichtungen zur Detektion einer Filterverschmutzung bekannt. Bei keiner dieser Lösungen ist allerdings vorgesehen, die Strömung bei der Messwerterfassung über den bezüglich seines Strömungswiderstands am besten einschätzbaren Teilströmungspfad zu leiten.

Außerdem wird auch noch auf die Dokumente DE 20 2016 006 983 U1, DE 10 2016 218 227 A1 und DE 20 2010 004 292 U1 hingewiesen.

Das erfindungsgemäße Verfahren einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

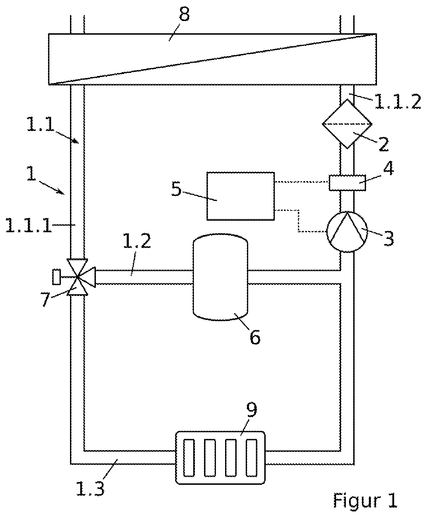

Es zeigt
- Figur 1: schematisch den Heizkreis einer Heizungsanlage mit zwei Teilströmungspfaden.

In der einzigen Figur ist ein Heizkreis zur Durchführung des erfindungsgemäßen Verfahrens dargestellt, bei dem ein Heizkreismedium durch einen Gesamtströmungspfad 1.1 eines Heizkreises 1 gefördert wird, bei dem das Heizkreismedium mindestens durch einen von mindestens zwei, zum Gesamtströmungspfad 1.1 gehörenden Teilströmungspfaden 1.2, 1.3 des Heizkreises 1 gefördert wird, bei dem geregelt wird, wieviel Heizkreismedium jeweils über die Teilströmungspfade 1.2, 1.3 gefördert wird und bei dem das Heizkreismedium, um es von Verschmutzungen zu reinigen, durch einen am Gesamtströmungspfad 1.1 des Heizkreises 1 vorgesehenen Filter 2 geleitet wird.

Wesentlich für das erfindungsgemäße Verfahren ist nun, dass bei einer Initialisierung der Heizungsanlage (was zum Beispiel bei der ersten Inbetriebnahme sein kann, aber nicht muss) das Heizkreismedium im wesentlichen vollständig (siehe oben) über den wahlweise die wenigsten veränderlichen Strömungswiderstände oder einen bekannten und/oder einen unveränderlichen Strömungswiderstand aufweisenden Teilströmungspfad 1.2 - Referenzströmungspfad 1.2 genannt - geleitet und ein Förderleistungsreferenzwert ermittelt und gespeichert wird und dass zur Überprüfung eines Verschmutzungszustandes des Filters 2 während des Betriebs der Heizungsanlage das Heizkreismedium wiederum im wesentlichen vollständig (siehe oben) über den bei der Initalisierung verwendeten Referenzströmungspfad geleitet, ein Förderleistungswert ermittelt, dieser mit dem Förderleistungsreferenzwert vergleichen und ab einer vorbestimmten Abweichung ein auf eine Verschmutzung des Filters 2 hinweisendes Signal erzeugt wird.

Dabei ist bevorzugt, dass das Heizkreismedium über einen zum Gesamtströmungspfad 1.1 gehörenden Vorlaufstrang 1.1.1 dem Heizkreis 1 zugeführt und über einen zum Gesamtströmungspfad 1.1 gehörenden Rücklaufstrang 1.1.2 vom Heizkreis 1 abgeführt wird. Ebenso ist vorzugsweise vorgesehen, dass das Heizkreismedium über einen den Rücklaufstrang 1.1.2 mit dem Vorlaufstrang 1.1.1 verbindenden Wärmeübertrager 8 geleitet wird. Zudem ist bevorzugt, dass der Wärmeübertrager 8 als Kondensator einer Wärmepumpe und zur Abgabe von Wärme an den Heizkreis 1 ausgebildet ist. Weiterhin wird das Heizkreismedium vorzugsweise durch den am Rücklaufstrang 1.1.2 des Heizkreises 1 angeordneten Filter 2 geleitet.

Des Weiteren ist bevorzugt, dass das Heizkreismedium vom Gesamtströmungspfad 1.1, vorzugsweise vom Vorlaufstrang 1.1.1, kommend, mittels eines Hauptventils 7 wahlweise auf den Referenzströmungspfad 1.2 und/oder auf den anderen Teilströmungspfad 1.3 geleitet wird. Dabei ist bevorzugt, dass als Hauptventil 7 ein 4-3-Wegeventil verwendet wird. Ferner ist bevorzugt, dass das durch den anderen, nicht den Referenzströmungspfad 1.2 bildenden Teilströmungspfad 1.3 strömende Heizkreismedium durch mindestens einen Radiator 9 (zum Beispiel ein Heizkörper) geleitet wird.

Ebenso ist bevorzugt, dass das Heizkreismedium bei der Initialisierung der Heizungsanlage und/oder bei der Überprüfung des Verschmutzungszustandes des Filters 2 durch den, abgesehen vom Hauptventil 7, vorzugsweise ventilfrei ausgebildeten Referenzströmungspfad 1.2 geleitet wird. Dabei wird das Heizkreismedium vorzugsweise bei der Initialisierung der Heizungsanlage und/oder Überprüfung des Verschutzungszustandes des Filters 2 durch den, abgesehen von nicht zu verhindernden Wärmeverlusten, wie etwa der natürlichen Wärmeabgabe von Rohrleitungen, wärmeübertragerfrei ausgebildeten Referenzströmungspfad 1.2 geleitet. Zudem ist bevorzugt, dass das Heizkreismedium bei der Initialisierung der Heizungsanlage und/oder Überprüfung des Verschutzungszustandes des Filters 2 durch einen am Referenzströmungspfad 1.2 angeordneten Pufferspeicher 6 geleitet wird. Dieser dient insbesondere zur Bereitstellung von warmem Heizkreismedium, falls der Verdampfer der Wärmepumpe, was in der kalten Jahreszeit passieren kann, enteist werden muss.

Des Weiteren ist bevorzugt vorgesehen, dass das Heizkreismedium mit einer Heizkreispumpe 3 durch den Heizkreis 1 gefördert und eine durch den Heizkreis 1 geförderte Heizkreismediummenge mittels einer Mengenmesseinrichtung 4 ermittelt wird. Zusätzlich ist bevorzugt, dass wahlweise der Förderleistungsreferenzwert und/oder der Förderleistungswert (gegebenenfalls unter Hinzuziehung weiterer Betriebsgrößen) auf Basis der Drehzahl der Heizkreispumpe 3 und auf Basis der mit der Mengenmesseinrichtung 4 erfassten Heizkreismediummenge ermittelt wird. Zuletzt ist noch vorzugsweise vorgesehen, dass der bei der Initialisierung der Heizungsanlage ermittelte Förderleistungsreferenzwert in einer elektronischen Regelungseinrichtung 5 der Heizungsanlage gespeichert wird.

Das erfindungsgemäße Verfahren zum Betrieb einer Heizungsanlage funktioniert gemäß einem bevorzugten Ausführungsbeispiel wie folgt:
Bei der ersten Inbetriebnahme der Heizungsanlage wird das Hauptventil 7 des Heizkreises 1 so eingestellt, dass das gesamte Heizkreismedium vom Vorlaufstrang 1.1.1 in den Referenzströmungspfad 1.2 fließt. Im Referenzströmungspfad 1.2 durchströmt das Heizkreismedium dann zunächst den bevorzugt vorgesehenen Pufferspeicher 6 und tritt dann wieder aus dem Referenzströmungspfad 1.2 aus und in den Rücklaufstrang 1.1.2 ein. Im Rücklaufstrang 1.1.2 durchläuft das Heizkreismedium dann zunächst die Heizkreispumpe 3, dann den Filter 2 und hiernach die Mengenmesseinrichtung 4, bevor es in den Wärmeübertrager 8 gelangt. Nun werden die Drehzahl der Heizkreispumpe 3 und die Durchflussmenge des Heizkreismediums, welches die Mengenmesseinrichtung 4 durchfließt, gemessen und hieraus in der elektronischen Regelungseinrichtung 5 der Heizungsanlage der Förderleistungsreferenzwert ermittelt und gespeichert. Das Hauptventil 7 kann nun wieder in seine Ausgangsposition zurück gestellt werden.

Während des regulären Betriebs der Anlage wird nun ein weiteres Mal das Hauptventil 7 so eingestellt, dass das Heizkreismedium nur noch durch den Referenzströmungspfad 1.2 gefördert wird. Hier werden dann wieder, wie oben bereits beschrieben, die Drehzahl der Heizkreispumpe 3 und die Durchflussmenge des Heizkreismediums, welches die Mengenmesseinrichtung 4 durchfließt, gemessen. Aus diesen Größen wird nun in der elektronischen Regelungseinrichtung 5 der Heizungsanlage der Förderleistungswert ermittelt und gespeichert.

Zum Schluss wird nun der Förderleistungsreferenzwert mit dem Förderleistungswert verglichen und beim Erreichen einer zuvor festgelegten Abweichung der beiden Werte voneinander ein Signal ausgegeben, welches eine Verschmutzung im Filter 2 indiziert.

Das erfindungsgemäße Verfahren stellt somit eine konstruktiv recht einfache, aber dennoch effiziente und vor allem gut reproduzierbare Werte liefernde Methode zur Detektion einer Verschmutzung eines Filters 2 in einem Heizkreis dar.

### Bezugszeichenliste

- 1: Heizkreis
- 1.1: Gesamtströmungspfad
- 1.1.1: Vorlaufstrang
- 1.1.2: Rücklaufstrang
- 1.2: Teilströmungspfad - auch Referenzströmungspfad
- 1.3: Teilströmungspfad
- 2: Filter
- 3: Heizkreispumpe
- 4: Mengenmesseinrichtung
- 5: Regelungseinrichtung
- 6: Pufferspeicher
- 7: Hauptventil
- 8: Wärmeübertrager
- 9: Radiator

## Patentansprüche

1. Verfahren zum Betrieb einer Heizungsanlage,
bei dem ein Heizkreismedium durch einen Gesamtströmungspfad (1.1) eines Heizkreises (1) gefördert wird,
bei dem das Heizkreismedium mindestens durch einen von mindestens zwei, zum Gesamtströmungspfad (1.1) gehörenden Teilströmungspfaden (1.2, 1.3) des Heizkreises (1) gefördert wird,
bei dem geregelt wird, wieviel Heizkreismedium jeweils über die Teilströmungspfade (1.2, 1.3) gefördert wird und
bei dem das Heizkreismedium, um es von Verschmutzungen zu reinigen, durch einen am Gesamtströmungspfad (1.1) des Heizkreises (1) vorgesehenen Filter (2) geleitet wird,
wobei, bei einer Initialisierung der Heizungsanlage das Heizkreismedium vollständig über den wahlweise die wenigsten veränderlichen Strömungswiderstände oder einen bekannten und/oder einen unveränderlichen Strömungswiderstand aufweisenden Teilströmungspfad (1.2) - Referenzströmungspfad (1.2) genannt - geleitet und ein Förderleistungsreferenzwert ermittelt und gespeichert wird und
wobei zur Überprüfung eines Verschmutzungszustandes des Filters (2) während des Betriebs der Heizungsanlage das Heizkreismedium wiederum vollständig über den bei der Initalisierung verwendeten Referenzströmungspfad geleitet, ein Förderleistungswert ermittelt, dieser mit dem Förderleistungsreferenzwert vergleichen und ab einer vorbestimmten Abweichung ein auf eine Verschmutzung des Filters (2) hinweisendes Signal erzeugt wird.

2. Verfahren nach Anspruch 1, wobei das Heizkreismedium mit einer Heizkreispumpe (3) durch den Heizkreis (1) gefördert und eine durch den Heizkreis (1) geförderte Heizkreismediummenge mittels einer Mengenmesseinrichtung (4) ermittelt wird, wobei wahlweise der Förderleistungsreferenzwert und/oder der Förderleistungswert auf Basis der Drehzahl der Heizkreispumpe (3) und auf Basis der mit der Mengenmesseinrichtung (4) erfassten Heizkreismediummenge ermittelt wird.

3. Verfahren nach Anspruch 1 oder 2, wobei das Heizkreismedium bei der Initialisierung der Heizungsanlage und/oder Überprüfung des Verschutzungszustandes des Filters (2) durch den ventilfrei ausgebildeten Referenzströmungspfad (1.2) geleitet wird.

4. Verfahren nach einem der Ansprüche 1 bis 3, wobei das Heizkreismedium bei der Initialisierung der Heizungsanlage und/oder Überprüfung des Verschutzungszustandes des Filters (2) durch den wärmeübertragerfrei ausgebildeten Referenzströmungspfad (1.2) geleitet wird.

5. Verfahren nach einem der Ansprüche 1 bis 4, wobei der bei der Initialisierung der Heizungsanlage ermittelte Förderleistungsreferenzwert in einer elektronischen Regelungseinrichtung (5) der Heizungsanlage gespeichert wird.

6. Verfahren nach einem der Ansprüche 1 bis 5, wobei das Heizkreismedium bei der Initialisierung der Heizungsanlage und/oder Überprüfung des Verschutzungszustandes des Filters (2) durch einen am Referenzströmungspfad (1.2) angeordneten Pufferspeicher (6) geleitet wird.

7. Verfahren nach einem der Ansprüche 1 bis 6, wobei das Heizkreismedium vom Gesamtströmungspfad (1.1) kommend mittels eines Hauptventils (7) wahlweise auf den Referenzströmungspfad (1.2) und/oder auf den anderen Teilströmungspfad (1.3) geleitet wird.

8. Verfahren nach einem der Ansprüche 1 bis 7, wobei das Heizkreismedium über einen zum Gesamtströmungspfad (1.1) gehörenden Vorlaufstrang (1.1.1) dem Heizkreis (1) zugeführt und über einen zum Gesamtströmungspfad (1.1) gehörenden Rücklaufstrang (1.1.2) vom Heizkreis (1) abgeführt wird.

9. Verfahren nach Anspruch 8, wobei das Heizkreismedium durch den am Rücklaufstrang (1.1.2) des Heizkreises (1) angeordneten Filter (2) geleitet wird.

10. Verfahren nach Anspruch 8 oder 9, wobei das Heizkreismedium über einen den Rücklaufstrang (1.1.2) mit dem Vorlaufstrang (1.1.1) verbindenen Wärmeübertrager (8) geleitet wird.

## Claims

1. Method for the operation of a heating system,
in which a heating circuit medium is conveyed through a total flow path (1.1) of a heating circuit (1), in which the heating circuit medium is conveyed through at least one of at least two partial flow paths (1.2, 1.3) of the heating circuit (1), belonging to the total flow path (1.1), in which is regulated how much heating circuit medium is conveyed via each of the partial flow paths (1.2, 1.3), and in which the heating circuit medium is routed through a filter (2) provided on the total flow path (1.1) of the heating circuit (1) in order to clean it of impurities. wherein in an initialisation of the heating system, the heating circuit medium is routed completely via the partial flow path (1.2) - referred to as the reference flow path (1.2) - having either the least variable flow resistances, or a known and/or an invariable flow resistance, and a flow rate reference value is determined and stored, and wherein for purposes of checking the contamination status of the filter (2) during operation of the heating system, the heating circuit medium is again routed completely via the reference flow path used during initialisation, a flow rate value is determined, this is compared with the flow rate reference value, and if there is a predetermined deviation, a signal indicating a contamination of the filter (2) is generated.

2. Method in accordance with claim 1, wherein the heating circuit medium is conveyed through the heating circuit (1) by a heating circuit pump (3), and a quantity of heating circuit medium conveyed through the heating circuit (1) is determined by means of a quantity measuring device (4), wherein optionally, the delivery rate reference value, and/or the delivery rate value, is determined on the basis of the rotational speed of the heating circuit pump (3), and on the basis of the heating circuit medium quantity recorded by the quantity measuring device (4).

3. Method in accordance with claim 1 or 2, wherein during the initialisation of the heating system, and/or the checking of the contamination status of the filter (2), the heating circuit medium is routed through the reference flow path (1.2) designed without valves.

4. Method in accordance with one of the claims 1 to 3, wherein during the initialisation of the heating system, and/or the checking of the contamination status of the filter (2), the heating circuit medium is routed through the reference flow path (1.2) designed without heat exchangers.

5. Method in accordance with one of the claims 1 to 4, wherein the flow rate reference value determined during the initialisation of the heating system is stored in an electronic regulation unit (5) of the heating system.

6. Method in accordance with one of the claims 1 to 5, wherein during the initialisation of the heating system, and/or the checking of the contamination status of the filter (2), the heating circuit medium is routed through a buffer tank (6) arranged on the reference flow path (1.2).

7. Method in accordance with one of the claims 1 to 6, wherein the heating circuit medium coming from the total flow path (1.1) is optionally routed by means of a main valve (7) onto the reference flow path (1.2), and/or onto the other partial flow path (1.3).

8. Method in accordance with one of the claims 1 to 7, wherein the heating circuit medium is supplied to the heating circuit (1) via a forward flow line (1.1.1) belonging to the total flow path (1.1), and is discharged from the heating circuit (1) via a return flow line (1.1.2) belonging to the total flow path (1.1).

9. Method in accordance with claim 8, wherein the heating circuit medium is routed through the filter (2) arranged on the return flow line (1.1.2) of the heating circuit (1).

10. Method in accordance with claim 8 or 9, wherein the heating circuit medium is routed via a heat exchanger (8) connecting the return flow line (1.1.2) to the forward flow line (1.1.1).

## Revendications

1. Procédé de fonctionnement d'une installation de chauffage dans lequel un fluide de circuit de chauffage est transporté à travers un trajet d'écoulement global (1.1) d'un circuit de chauffage (1),
dans lequel le fluide de circuit de chauffage est transporté au moins à travers un d'au moins deux trajets d'écoulement partiels (1.2, 1.3) du circuit de chauffage (1) faisant partie du trajet d'écoulement global (1.1), dans lequel il est régulé combien de fluide de circuit de chauffage est transporté respectivement sur les trajets d'écoulement partiels (1.2, 1.3) et dans lequel le fluide de circuit de chauffage, pour le nettoyer de l'encrassement, est dirigé à travers un filtre (2) prévu sur le trajet d'écoulement global (1.1) du circuit de chauffage (1), dans lequel lors d'une initialisation de l'installation de chauffage, le fluide de circuit de chauffage est dirigé complètement sur le trajet d'écoulement partiel (1.2) présentant au choix le moins de résistances à l'écoulement variables ou une résistance à l'écoulement connue et/ou invariable, appelé trajet d'écoulement de référence (1.2), et une valeur de référence de débit est déterminée et enregistrée et dans lequel, pour vérifier un état d'encrassement du filtre (2) pendant le fonctionnement de l'installation de chauffage, le fluide de circuit de chauffage est de nouveau dirigé complètement sur le trajet d'écoulement de référence employé lors de l'initialisation, une valeur de débit est déterminée, celle-ci est comparée à la valeur de référence de débit et à partir d'un écart prédéfini, un signal indiquant un encrassement du filtre (2) est produit.

2. Procédé selon la revendication 1, dans lequel le fluide de circuit de chauffage est transporté à travers le circuit de chauffage (1) par une pompe de circuit de chauffage (3) et une quantité de fluide de circuit de chauffage transportée à travers le circuit de chauffage (1) est déterminée au moyen d'un dispositif de mesure de quantités (4), dans lequel, au choix, la valeur de référence de débit et/ou la valeur de débit est déterminée en se basant sur le régime de la pompe de circuit de chauffage (3) et en se basant sur la quantité de fluide de circuit de chauffage détectée avec le dispositif de mesure de quantités (4).

3. Procédé selon la revendication 1 ou 2, dans lequel le fluide de circuit de chauffage, lors de l'initialisation de l'installation de chauffage et/ou de la vérification de l'état d'encrassement du filtre (2), est dirigé à travers le trajet d'écoulement de référence (1.2) formé sans soupape.

4. Procédé selon l'une des revendications 1 à 3, dans lequel le fluide de circuit de chauffage, lors de l'initialisation de l'installation de chauffage et/ou de la vérification de l'état d'encrassement du filtre (2), est dirigé à travers le trajet d'écoulement de référence (1.2) formé sans échangeur thermique.

5. Procédé selon l'une des revendications 1 à 4, dans lequel la valeur de référence de débit déterminée lors de l'initialisation de l'installation de chauffage est enregistrée dans un dispositif de régulation électronique (5) de l'installation de chauffage.

6. Procédé selon l'une des revendications 1 à 5, dans lequel le fluide de circuit de chauffage, lors de l'initialisation de l'installation de chauffage et/ou de la vérification de l'état d'encrassement du filtre (2), est dirigé à travers un réservoir tampon (6) disposé sur le trajet d'écoulement de référence (1.2).

7. Procédé selon l'une des revendications 1 à 6, dans lequel le fluide de circuit de chauffage venant du trajet d'écoulement global (1.1) est dirigé au moyen d'une soupape principal (7) au choix sur le trajet d'écoulement de référence (1.2) et/ou sur l'autre trajet d'écoulement partiel (1.3).

8. Procédé selon l'une des revendications 1 à 7, dans lequel le fluide de circuit de chauffage est alimenté vers le circuit de chauffage (1) sur une voie d'alimentation (1.1.1) faisant partie du trajet d'écoulement global (1.1) et évacué du circuit de chauffage (1) sur une voie de retour (1.1.2) faisant partie du trajet d'écoulement global (1.1).

9. Procédé selon la revendication 8, dans lequel le fluide de circuit de chauffage est dirigé à travers le filtre (2) disposé sur la voie de retour (1.1.2) du circuit de chauffage (1).

10. Procédé selon la revendication 8 ou 9, dans lequel le fluide de circuit de chauffage est dirigé sur un échangeur thermique (8) reliant la voie de retour (1.1.2) à la voie d'alimentation (1.1.1).
